# EUROPEAN PATENT APPLICATION

(11) **EP 2 944 813 A1**
(43) Date of publication of application: **18.11.2015**
(21) Application number: 14168332.6
(22) Date of filing: 14.05.2014
(51) Int. Cl.: F03G 7/08

(54) **An energy harvesting system**

(71) Applicant: Commonwealth Scientific and Industrial Research Organization, Campbell, Australian Capital Territory 2612 (AU)
(72) Inventor: McGarry, Scott, New Castle, New South Wales 2300 (AU); Percy, Steven, Newcastle, New South Wales 2300 (AU); Corr, Timothy, Manly, New South Wales 2095 (AU)
(74) Representative: Ishiguro, Masaoki

(57) **Abstract**

An energy harvesting system comprising:
a housing with a mounting interface arranged to secure the housing in line with a suspended load,
a hub integrated with the mounting interface and secured to the housing by a bearing interface that facilitates rotation of the hub relative to the housing,
a tether connected to the hub that connects the hub and mounting interface in line with a suspended load,
an energy collector connected between the hub and a base, the energy collector enabling relative movement between the hub and the base, thereby enabling torque to be applied to the hub; and
an electrical generator mounted to the housing, the electrical generator having a rotor that is coupled to the hub.

## Description

### FIELD OF THE INVENTION

The invention relates to energy harvesting systems for converting kinetic energy into electrical energy.

### BACKGROUND

Energy harvesting is a power generation process that extracts incidental energy from localized environments with negligible impact on the surroundings. Energy harvesters are typically used to power small electronic devices. Energy harvesting systems are employed in solar power calculators, kinetic wrist watches, passive RFID tags and other devices.

Energy harvesting systems are often coupled with electrical storage components (such as batteries or capacitors) and voltage regulating circuitry (such as an inverter). This allows harvested energy to be accumulated and prevents disruption from intermittent and/or irregular generation characteristics.

An energy harvesting system that generates electrical energy from bipedal motion is disclosed in US 7,851,932 (Rome). The disclosed system integrates with a backpack to harvest vibrational energy produced by oscillation of the pack relative to the shoulder straps. The pack mounts to a set of rails that facilitate reciprocating motion in a generally vertical plane. The rails and harvesting circuitry are supported by a frame that is fixed to the shoulder straps.

The rails allow the pack to oscillate relative to the shoulder straps when the backpack is worn. The sliding motion of the pack is transmitted to an electrical generator by a rack and pinion drive or pulley system mounted to the frame. A compression or tension spring offsets gravitational forces to allow the pack to oscillate during select activities (such as walking and running).

### SUMMARY OF THE INVENTION

In a first aspect, the present invention provides an energy harvesting system comprising:
a housing with a mounting interface arranged to secure the housing inline with a suspended load,
a hub integrated with the mounting interface and secured to the housing by a bearing interface that facilitates rotation of the hub relative to the housing,
a tether connected to the hub that connects the hub and mounting interface inline with a suspended load,
an energy collector connected between the hub and a base, the energy collector enabling relative movement between the hub and the base, thereby enabling torque to be applied to the hub; and
   , and
an electrical generator mounted to the housing, the electrical generator having a rotor that is coupled to the hub.

In an embodiment the system comprises a drivetrain that couples the hub with the rotor, the drivetrain including a one-way-clutch that engages in a single rotational direction.

In an embodiment the system comprises two distinct drivetrains that independently couple the hub with the rotor, each of the drivetrains including a one-way-clutch that engages in a single rotational direction, the respective one-way-clutches being mounted to engage in opposing directions of hub rotation.

In an embodiment the system comprises a step up drivetrain that couples the rotor of the electrical generator to the hub and causes the rotor to spin at a rotational velocity that is greater than the hub.

In an embodiment the system comprises a flywheel coupled to the rotor of the electrical generator that stores rotational energy accumulated by the system.

The energy collector is any device capable of receiving, storing and transferring energy and, within the context of the present invention, enables relative movement between the hub and the base. In various embodiments, the energy collector can be a linear spring, non-linear spring, constant force spring, laminated spring, leaf spring, tension spring, compressible elastic material, elastic cord, torsion spring, flexure springs, a chamber of gas or fluid that is compressed, other predominantly resilient or non-dissipative structure, or a combination thereof.

Design calculations can be used to increase the power output of the energy collector. Adjustments can be made to the spring constant, spring linearity, mass of the moving system, generator characteristics, damping coefficients, and system natural and peak frequencies, along with other design parameters.

The energy collector can be made from a wide range of materials. The springs and, for example, may comprise stainless steel, corrosion resistant steel, heat resistant steel, nickel alloy, cobalt alloy, copper alloy, composite, ceramic, polymer or a combination thereof.

The base may form part of the tether, housing or other anchor point, whereby the energy collector enables relative movement between the hub and the base.

In one embodiment, the base is a tether, the tether also comprising the energy collector through the tether having an elastic section disposed in a loop that causes the tether to produce a torque on the hub as the elastic section extends and contracts in tension.

The loop may be asymmetrical or symmetrical. The loop may be a closed loop (i.e. the tether reconnecting to itself) or open (i.e. the ether not reconnecting to itself).

The torque is typically an unbalance frictional torque.

In an alternative embodiment, the base is the housing and the energy collector is a torsion spring connected between a rotational axis of the hub and the housing, such that as the hub rotates the torsion spring resists rotations in one direction and assists rotation in the opposing direction.

The system may comprise more than one energy collectors.

In an embodiment the tether is formed from adjoining elastic and less elastic or inelastic sections.

In an embodiment the tether is formed from an inelastic cord with an inline coil spring.

In an embodiment the system comprises a buckle attached to terminal ends of the tether that closes the loop and facilitates mounting inline with a bag.

In an embodiment the generator is a DC electrical generator.

In a second aspect, the present invention provides an energy harvesting system comprising:
a housing with a mounting interface, the mounting interface incorporating a hub,
a tether looped about the hub to secure the mounting interface inline with a suspended load, the tether having an elastic section disposed asymmetrically in the loop, and
an electrical generator mounted to the housing and coupled to the hub.

In an embodiment the system comprises a bearing interface seated within the housing that facilitates rotation of the hub relative to the housing.

In an embodiment the system comprises a drivetrain that couples the hub with the electrical generator, the drivetrain including a one-way-clutch that engages in a single rotational direction.

In an embodiment the system comprises two distinct drivetrains that independently couple the hub with the electrical generator, each of the drivetrains including a one-way-clutch that engages in a single rotational direction, the respective one-way-clutches being mounted to engage in opposing directions of hub rotation.

In an embodiment the system comprises a step up drivetrain that couples the electrical generator to the hub and causes the electrical generator to spin at a rotational velocity that is greater than the hub.

In an embodiment the system comprises a flywheel coupled to the electrical generator that stores rotational energy accumulated by the system.

In a third aspect, the present invention provides an energy harvesting system comprising a generation mechanism with a hub coupled to an electrical generator and a tether with an elastic section looped about the hub to connect the energy harvesting system inline with a suspended load.

In a fourth aspect, the present invention provides an energy harvesting system comprising:
a housing with a mounting interfaces arranged to secure inline with a suspended load, the mounting interfaces incorporating a hub,
a drivetrain coupled to the hub, the drivetrain including a one-way-clutch that engages with the hub in a single rotational direction, and
a DC generator coupled to an output of the drivetrain that is driven in a single direction by rotation of the hub.

In an embodiment the system comprises a tether looped about the hub and arranged to secure the mounting interface inline with a suspended load, the tether having an elastic section disposed asymmetrically in the loop.

In an embodiment the system comprises a second drivetrain that independently couples the hub with the DC electrical generator, the second drivetrain including a one-way-clutch that engages in a distinct direction of hub rotation.

In an embodiment the system comprises a flywheel coupled to the DC electrical generator that stores rotational energy accumulated by the system.

In an embodiment the system comprises a freewheel coupled between the drivetrain and DC electrical generator that disengages the generator from the drivetrain when the rotational velocity of the flywheel exceeds the driving velocity of the drivetrain.

In a fifth aspect, the present invention provides consumer baggage comprising an energy harvesting system as previously described in aspects one to four.

In a fifth aspect, the present invention provides use of the system according to apects one to four to harvest energy from an oscillating load..

In an embodiment the oscillating load is a bag.

Conventional harvesting systems (such as the system disclosed in US 7,851,932) are complicated and obtrusive. These systems are often permanently integrated with products or require significant product modification.

Embodiments of the energy harvesting system disclosed in this specification advantageously address these inadequacies. The mounting and drivetrain arrangements of these embodiments allow the system to be compact and unobtrusive while facilitating retrofitting with minimal modification to existing products (such as consumer bags). Embodiments of the system can be inconspicuously mounted to the strap or handle of a consumer bag without interfering with normal function.

### BRIEF DESCRIPTION OF THE DRAWINGS

Features and advantages of the present invention will become apparent from the following description of embodiments thereof, by way of example only, with reference to the accompanying drawings, in which:
Figure 1 is a perspective view of a backpack incorporating an energy harvesting system mounted inline with the pack body.
Figure 2a is a perspective view of a generation mechanism that mounts inline with a suspended load.
Figure 2b is a perspective view of an energy harvesting system incorporating the mechanism illustrated in Figure 2a and a tether.
Figure 3 is a perspective view of an energy harvesting system mounted inline with a strap.
Figure 4 is a force diagram for the energy harvesting system illustrated in Figure 3.
Figure 5 is a circuit diagram for an energy harvesting system that incorporates a DC generator.
Figure 6 is a circuit diagram for an energy harvesting system that incorporates an AC generator.

### Detailed Description

An embodiment of an energy harvesting system that extracts electrical energy from mechanical oscillations is disclosed in this specification. The system mounts inline with a suspended load that is subjected to recurring impulsive forces. These forces produce mechanical vibrations that the harvesting system converts to electrical energy.

The energy harvesting system comprises a generation mechanism that converts kinetic energy to electrical energy. The energy harvesting system is typically coupled to a tether that drives the generation mechanism. The tether transforms rectilinear motion of the suspended load to rotational motion within the generation mechanism. The rotational motion is transferred to an electrical generator within the generation mechanism.

The generation mechanism incorporates a hub that functions as a mounting interface for the tether. The tether loops around the hub and secures inline with the generation mechanism and suspended load. This retains the energy harvesting system in tension and produces a frictional interface between the hub and tether. Locating the harvesting system inline with the suspended load reduces installation complexity, allowing the system to be retrofitted with not or minimal ancillary components.

The tether may have an elastic section within the loop that fastens about the hub. The elastic section adjoins inelastic or less elastic sections of the tether and is offset to one side of the hub (i.e. it is disposed asymmetrically within the loop). The position of the elastic section causes the sides of the loop (either side of the hub) to change length disproportionately during extension and contraction of the elastic section. The tether typically produces an unbalanced frictional torque on the hub as the length of the elastic section changes in tension.

A drivetrain within the generation mechanism transfers rotational motion of the hub to the rotor of the electrical generator. The drivetrain incorporates a one-way-clutch that engages the hub in a single rotational direction. This facilitates use of a DC electrical generator as the drivetrain produces motion in a single rotational direction. This eliminates the need for voltage rectification and the losses associated with rectification circuitry. The drivetrain typically implements a 'step up' transmission ratio that increases rotational velocity at the output (the rotor of the electrical generator) to improve generation efficiency. The rotor is typically driven at a velocity that is an order of magnitude greater than the velocity of the hub.

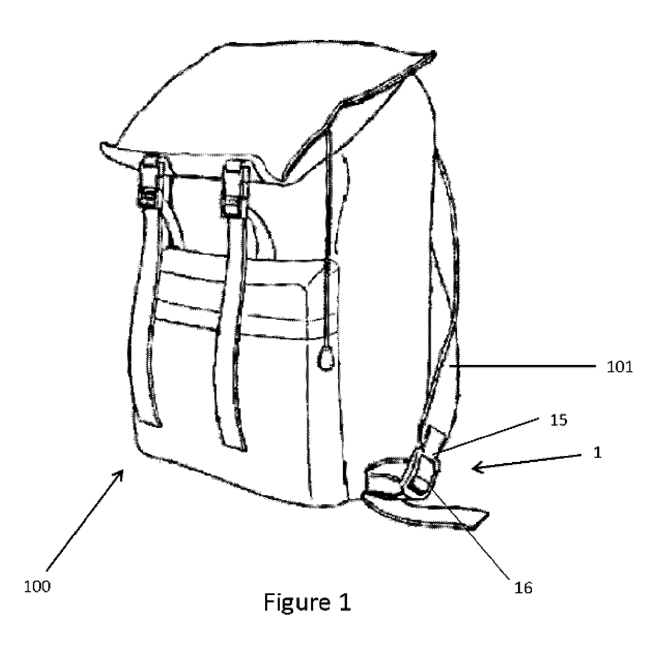

An embodiment of the energy harvesting system is depicted in Figure 1. The illustrated energy harvesting system 1 is connected inline with the shoulder strap 101 of a backpack 100 in place of a buckle so that the harvesting system 1 forms part of the structure supporting the load. This places the energy harvesting system 1 in tension when the backpack is being worn.

The depicted energy harvesting system 1 is generally un-intrusive and can be fit to most common consumer bags (including retrofitting). Kinetic energy from oscillation of the backpack 100 is transferred to the energy harvesting system 1 by the shoulder strap 101. A similar mounting configuration is used for handheld bags and shoulder bags (typically interposed between the shoulder strap and suspended load). To be suitable for use in consumer baggage, the energy harvesting system is preferably compact (e.g. may be held within the palm of a hand) and light e.g. preferably less than 500 grams, more preferably less than 300 grams and typically at least 100 grams. Preferably, a large proportion of the components, particularly external components, are produced from polymeric materials, including composite materials. This enables the mechanism to be more readily integrated into the consumer baggage to ensure greater comfort for the wearer. The consumer bag may include backpacks, handbags, computer bags, carrier bags, courier bags and school bags.

The energy harvesting system 1 comprises a generation mechanism 16 and a tether 15. The tether 15 connects one end of the generation mechanism 16 to the shoulder strap 101 of the bag 100. The height of the generation mechanism is typically restricted to 120mm or less (usually between 60mm and 100mm) for most consumer baggage applications to mitigate interference and weight. These systems 1 are intended to support loads of up to 18kg (usually between 7kg and 14kg) for a single bag strap 101. However, the generation mechanism 16 can be scaled for specific applications (including consumer baggage).

The generation mechanism 16 incorporates a compact electrical generator that converts kinetic energy derived from oscillation of the backpack 100 into electrical energy. The energy harvesting system 1 depicted in Figure 1 is capable of generating enough energy to power small portable electronic devices (such as a mobile phone or portable GPS unit), typically between 400mW and 1000mW depending on physical constraints and excitation characteristics. The system 1 uses a compact generator and drivetrain (typically between 12mm and 20mm in diameter) to produce the electrical output. The output and component specifications may be scaled for different applications.

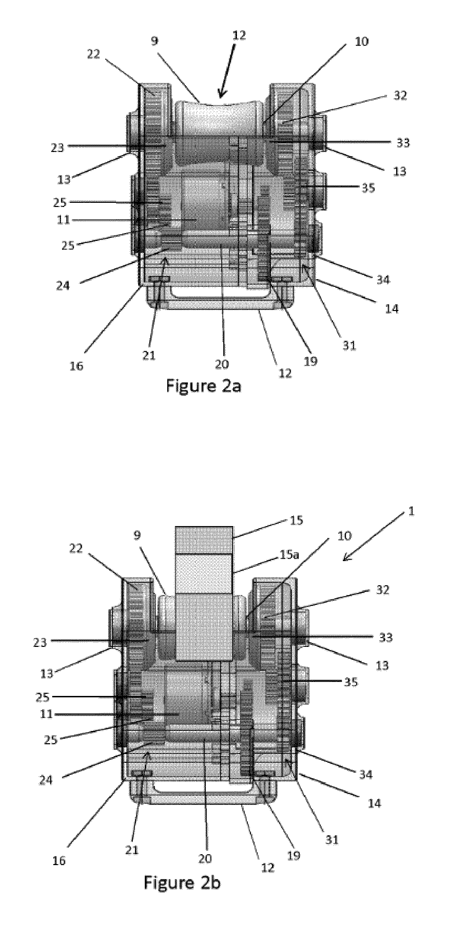

A close up perspective view of a generation mechanism 16 for consumer baggage applications is presented in Figures 2a and 2b. The depicted generation mechanism 16 has a translucent housing 14. The housing 14 has opposing mounting interfaces (depicted as mounting lugs 12) disposed at the longitudinal ends of the generation mechanism 16. The mounting lugs 12 secure the generation mechanism 16 inline with a suspended load so that it forms part of the structure supporting the load.

A hub 10 is integrated with one of the mounting lugs 12. The hub 10 is secured to the housing 14 by a bearing interface 13 that facilitates rotation of the hub 10 relative to the housing 14.

The illustrated bearing interface 13 comprises 2 axially spaced bearings that support opposing ends of the hub 10. The respective bearings seat within complimentary mounts formed in the housing 14. Journal bearings or simple roller bearings are typically used to mitigate cost and weight. Journal bearings can be integrated with the housing 14 to simplify assembly.

The hub 10 illustrated in Figures 2a and 2b incorporates a drum 9 that the tether 15 engages. The drum 9 has a slightly concave surface that centers the tether. A crowned pulley may be employed in place of the depicted drum. The surface of the drum (or crowned pulley) is ideally texturized to increase friction with the tether 15.

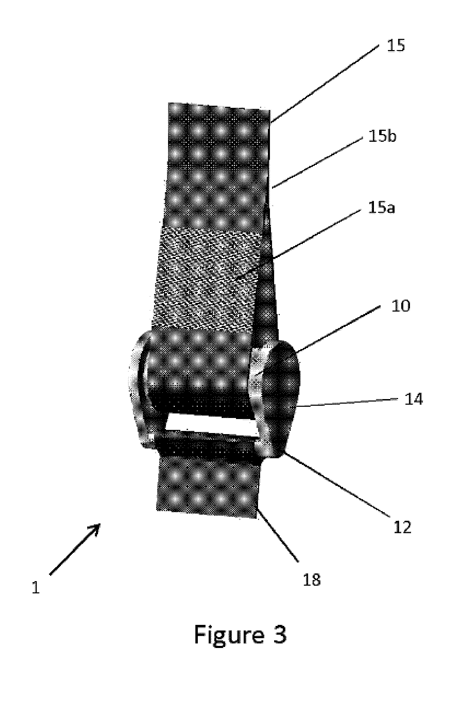

A perspective representation of another energy harvesting system 1 is depicted in Figure 3. The illustrated harvesting system 1 is connected inline with a suspended load by a strap 18 (such as a shoulder or hand strap of a bag) and tether 15. The tether 15 is formed in a loop about the hub 10. The loop terminates at a load junction 15b. Two sections of the tether 15 are stitched together to form the load junction 15b in the illustrated embodiment. An ancillary component (such as a buckle or a clip) may also be used to terminate the loop.

The energy harvesting system 1 supports the suspended load by bearing a portion of the weight force (as the system 1 is mounted inline). This places the housing 14 and tether 15 in tension (causing the loop to elongate). The load junction 15b and the hub 15 are maintained at opposing ends of the elongated loop while the system 1 is in tension.

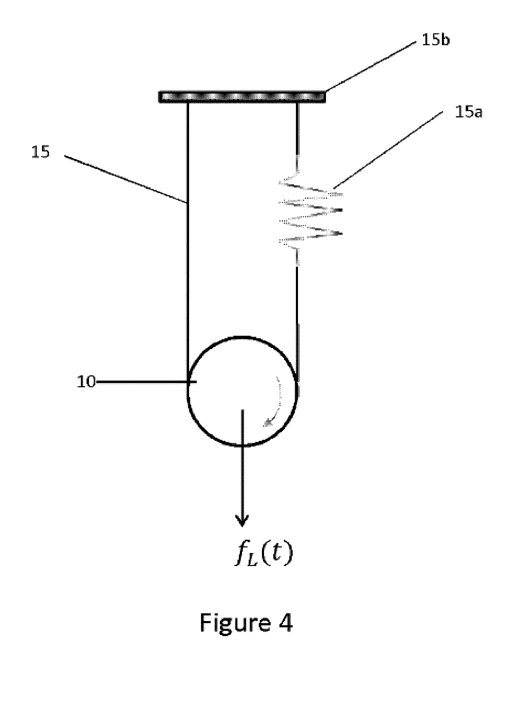

The tether 15 has an elastic section 15a disposed asymmetrically in the loop (i.e. offset with respect to the hub 10 and load junction 15b). The elastic section 15a extends when the suspended load is excited by an external force (such as an impulse generated by bipedal motion). This process is depicted schematically in the force diagram presented in Figure 4.

The force (*fₗ*(*t*)) causes the elastic section 15a to extended. This extension produces an internal force within the elastic section 15a (the return force) that biases the suspended load to an equilibrium position. The suspended load is returned to the equilibrium position by contraction of the elastic section 15a when the external force is removed.

The asymmetric position of the elastic section 15a causes the tether 15 to produce an unbalanced frictional torque on the hub 10 as the elastic section 15a extends and contracts with oscillation of the suspended load. A double acting generation mechanism (depicted in Figures 2a and 2b) is capable of deriving energy from direct excitation of the suspended load (corresponding to extension of the tether 15) and the motion produced by the elastic section 15a returning the suspended load to the equilibrium position following excitation (corresponding to contraction of the tether 15).

Extension and contraction of the elastic section 15a alters the length of the tether loop encompassing the hub 10. This causes the displacement between the respective tether mounts to change. The asymmetric positioning of the elastic section 15a causes the hub 10 to 'roll' across the surface of the tether to accommodate these changes (depicted schematically in Figure 4).

The generation and transmission of torque by the tether 15 is dependent on tension from the suspended load. This tension causes friction between the tether 15 and the hub 10 (allowing the tether to impart torque on the hub). It also causes the hub 10 to remain in contact with the tether 15 as the elastic section 15a contracts. Mounting the generation mechanism 16 and tether 15 inline with the suspended load ensures that the harvesting system 1 is retained in tension.

The generation mechanism 16 includes an electric generator that produces electrical energy from oscillation of the suspended load. The electrical generator 11 is coupled to the hub 10 by a drivetrain. The drivetrain transfers rotational motion from the hub 10 to a rotor within the electrical generator 11. A 'step-up' transmission ratio may be used to increase the rotational velocity of the output (the speed of the generator rotor) relative to the input (hub 10 speed). This generally improves generation efficiency.

The generation mechanism 16 depicted in Figures 2a and 2b comprises two distinct drivetrains 21, 31 that independently couple the hub 10 with the rotor of the electrical generator 11. The depicted drivetrains 21, 31 use spur gears to transfer rotational motion from the hub 10 to the electrical generator. Other drivetrain configuration may be used in place of spur gears (such as helical gears, a chain drive or belt drives).

Each of the drivetrains 21, 31 includes a one-way-clutch 23, 33 (such as a sprag clutch) that engages the hub 10 in a single rotational direction. The respective one-way clutches 23, 33 are mounted to engage in opposing directions of hub 10 rotation (i.e. the rotational direction of the hub 10 determines which clutch engages). This makes the respective drivetrains 21, 31 responsive to rotation of the hub 10 in distinct directions (i.e. clockwise rotation of the hub 10 engages drivetrain 21 and anticlockwise of the hub 10 engages drivetrain 31).

The drivetrains 21, 31 transfer rotational motion from the hub 10 to a common driveshaft 20. The driveshaft 20 is coupled to a transfer gear 19 that drives the rotor of the electrical generator 11. The illustrated drivetrains 21, 31 rotate the drive shaft 20 in the same rotational direction. This is accomplished by asymmetric gearing. The drivetrains 21, 31 may have the same drive ratio or different drive ratios.

The right side gear train 31 depicted in Figures 2a and 2b has a single idler gear 35 disposed between the drive gear 32 and driven gear 34. This gear configuration drives the output shaft 20 in the same direction as the hub 10. The depicted drivetrain 31 employs a split idler gear 35 with different input and output ratios (this facilitates ratio matching with the left side drivetrain 21).

The drivetrain 21 disposed to the left of the generation mechanism 16 depicted in Figures 2a and 2b has two idler gears 25 disposed between the drive gear 22 and driven gear 24. This gear train configuration drives the output shaft 20 in reverse (i.e. the opposite direction of spin to the hub 10).

Each of the one-way-clutches 23, 33 is disposed between the hub 10 and a corresponding drive gear 22, 32 in the depicted generation mechanism 16. Either clutch may be relocated within the drivetrain (such as between the driven gear 24, 34 and driveshaft 20) to accommodate design constraints.

The respective one-way-clutches 23, 33 are mounted to engage the hub 10 in distinct directions (i.e. the respective drivetrains 21, 31 are driven by opposing rotation of the hub 10). This produces a consistent direction of rotation at the driveshaft 20 irrespective of the motion at the hub 10 due to the relative gearing of the illustrated drivetrains 21, 31.

The depicted generation mechanism 16 uses a DC electrical generator 11 to produce an electrical output from the motion of the hub 10. This is possible because the respective drivetrains 21, 31 rotate the driveshaft 20 in a single direction. Using a DC electrical generator eliminates the need for rectification and the voltage drop associated with rectifier electronics.

The dual drivetrain generation mechanism 1 depicted in Figures 2a and 2b is double acting. The mechanism 16 derives energy from direct excitation of the suspended load (corresponding to extension of the elastic section 15a of the tether 15) and the motion produced the elastic section 15a returning the suspended load to an equilibrium position following excitation (corresponding to contraction of the elastic section 15a of the tether 15).

A single acting generation mechanism can be used to reduce cost, complexity, size and weight. Single acting generation mechanisms employ an individual drivetrain that is responsive to rotation of the hub in a single direction. The drivetrain of a single acting generation mechanism incorporates a one-way-clutch that allows the hub to freewheel in one direction (usually the direction corresponding to contraction of the elastic section 15a of the tether 15). The generation mechanism 16 depicted in Figures 2a and 2b can be converted to a single acting mechanism by removing or disabling one of the drivetrains 21, 31.

The generation mechanism 16 may incorporate a flywheel to store rotational energy accumulated by the system. Flywheels are beneficial in high impact applications where the harvesting system 1 is excited by large impulse forces. The electrical generator 11 illustrated in Figures 2a and 2b incorporates an integral flywheel. The flywheel maintains the rotational momentum of the generator system following impulsive loading. The rotational momentum of the flywheel is gradually converted to electrical energy by the generator 11.

The flywheel is coupled to the rotor of the electrical generator 11. This increases the rotational inertia of the generation mechanism 16. The one-way-clutch 23, 33 incorporated in each drivetrain 21, 31 disengages the rotor of the electrical generator 11 from the hub 10 when the rotational velocity of the flywheel exceeds the driving velocity of the hub 10.

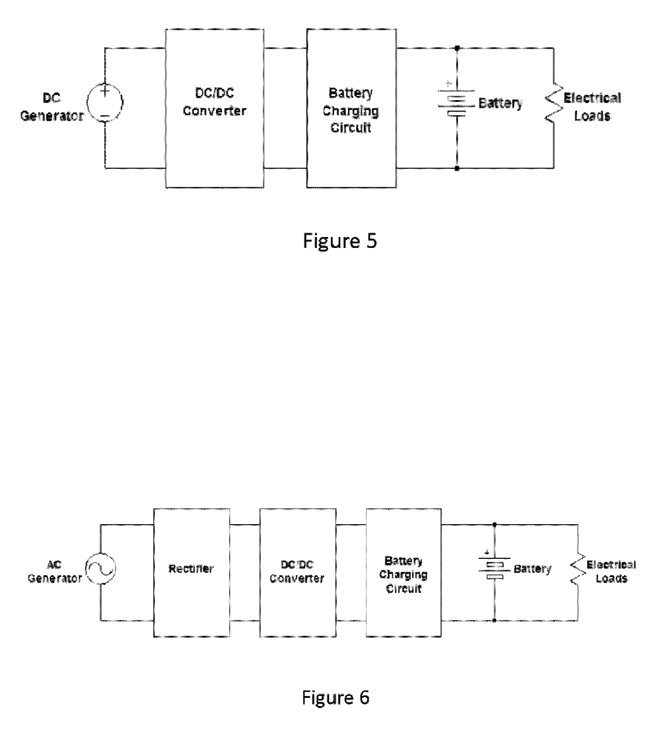

Schematic circuit diagrams for a DC generator and an AC generator are depicted in Figures 5 and 6 respectively. Using a DC generator eliminates the need for voltage rectification and the power losses associated with rectification circuitry. Both DC and AC circuits incorporate batteries to prevent disruption from intermittent and/or irregular system excitation. The batteries are preferably flexible batteries, such that they are comfortable to wear. Suitable batteries are described in US8192863.

In a preferred embodiment, the generation mechanism further comprises a controller arranged to maximum energy harvesting through adaptive learning of the varying vibration characteristics. An example of such a controller is described in US7977852.

The hub structure illustrated in the drawings comprises a drum with a defined bearing surface. However, other hub structures may be used without altering the operation of the harvesting system. The hub may comprise any form of shaft or structure that provides a bearing surface that the tether can engage and rotate.

Similarly, different tether structures and materials may be utilized without altering the operation of the harvesting system. The tether may comprise any form of loop that is stiff in tension. Examples include cords, straps, wires, belts and chains. The material used to fabric the tether may be impacted on the corresponding tether structure. For example, wire tethers are typically fabricated from a metal or similar material.

Embodiments of the harvesting system can be retrofit to existing consumer bags and other tension bearing systems with minimal modification. Typical applications include backpacks, handbags, computer bags, carrier bags, courier bags and school bags. However, the device may be used with other tension bearing systems that are subject to mechanical oscillations, such as harness systems for quadrupeds (such as horses and donkeys) and load restraining straps for vehicular cargo (such as airliner or truck cargo restraints).

Embodiments of the system can be inconspicuously retrofitted to existing products with minimal modification. Examples including consumer bag applications where the system is mounted to the handle or strap of a backpack, handbag or laptop bag.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

It will be understood to persons skilled in the art of the invention that many modifications may be made without departing from the spirit and scope of the invention.

## Claims

1. An energy harvesting system comprising:
a housing with a mounting interface arranged to secure the housing inline with a suspended load,
a hub integrated with the mounting interface and secured to the housing by a bearing interface that facilitates rotation of the hub relative to the housing,
a tether connected to the hub that connects the hub and mounting interface inline with a suspended load,
an energy collector connected between the hub and a base, the energy collector enabling relative movement between the hub and the base, thereby enabling torque to be applied to the hub; and
an electrical generator mounted to the housing, the electrical generator having a rotor that is coupled to the hub.

2. The system of claim 1 comprising a drivetrain that couples the hub with the rotor, the drivetrain including a one-way-clutch that engages in a single rotational direction.

3. The system of claim 1 comprising two distinct drivetrains that independently couple the hub with the rotor, each of the drivetrains including a one-way-clutch that engages in a single rotational direction, the respective one-way-clutches being mounted to engage in opposing directions of hub rotation.

4. The system of claim 1 comprising a step up drivetrain that couples the rotor of the electrical generator to the hub and causes the rotor to spin at a rotational velocity that is greater than the hub.

5. The system of any one of claims 1 to 4 comprising a flywheel coupled to the rotor of the electrical generator that stores rotational energy accumulated by the system.

6. The system of any one of the preceding claims, wherein the base is a tether, the tether also comprising the energy collector through the tether having an elastic section disposed in a loop that causes the tether to produce frictional torque on the hub as the elastic section extends and contracts in tension.

7. The system of claim 6 wherein the tether is formed from adjoining elastic and less elastic or inelastic fabric sections.

8. The system of any one of claims 6 or 7 wherein the tether is formed from an inelastic cord with an inline coil spring.

9. The system of any one of claims 6 to 8 comprising a buckle attached to terminal ends of the tether that closes the loop and facilitates mounting inline with a bag.

10. The system according to any one of claims 1 to 9, wherein the base is the housing and the energy collector is a torsion spring connected between a rotational axis of the hub and the housing, such that as the hub rotates the torsion spring resists rotations in one direction and assists rotation in the opposing direction.

11. The system of any one of the preceding claims wherein the generator is a DC electrical generator.

12. A consumer bag comprising an energy harvesting system according to any one of the preceding claims.

13. A consumer bag according to claim 12, wherein the consumer bag is selected from the group consisting of backpacks, handbags, computer bags, carrier bags, courier bags and school bags.

14. A consumer bag according to claim 12 wherein the harvesting system is mounted inline with a handle or strap that supports the weight of the bag.

15. Use of the system according to any one of claims 1 to 11, to harvest energy from an oscillating load.
